# EUROPÄISCHE PATENTSCHRIFT

(11) **EP 1 315 304 B1**
(45) Veröffentlichungstag und Bekanntmachung des Hinweises auf die Patenterteilung: **21.10.2009**
(21) Anmeldenummer: 02102577.0
(22) Anmeldetag: 14.11.2002
(51) Int. Cl.: H04B 1/10, H04L 7/04, H04L 7/033

(54) **Empfangsschaltung zum Empfang von Nachrichtensignalen**
Receiver circuit for communications signals
Récepteur pour signaux de communication

(30) Priorität: 16.11.2001 DE 10156112
(43) Veröffentlichungstag der Anmeldung: 28.05.2003
(73) Patentinhaber: NXP B.V., 5656 AG Eindhoven (NL)
(72) Erfinder: Budde,Wolfgang.c/o Philips Corp.Int.Property GmbH, D-52088, Aachen (DE); Furmann,Peter.c/o Philips Corp.Int.Property GmbH, D-52088, Aachen (DE)
(74) Vertreter: van der Veer, Johannis Leendert

(56) Entgegenhaltungen:
- EP-A- 0 425 302
- EP-A- 0 540 946
- US-A- 4 788 696
- US-A- 5 715 278

## Beschreibung

Die Erfindung bezieht sich auf eine Empfangsschaltung zum Empfang von Nachrichtensignalen mit einem Abtaster zur Umwandlung des Nachrichtensignals in ein Abtastsignal.

Unter einem Nachrichtensignal wird ein Signal verstanden, welches in beliebiger Weise codierte Informationen aufweist. Als Abtaster wird eine Anordnung bezeichnet, welche das Nachrichtensignal zu vorgebbaren Zeitpunkten abtastet und in ein Abtastsignal umwandelt.

Vor der Übertragung über Nachrichtenkanäle oder vor der Aufzeichnung auf einem Datenträger werden Nachrichten bzw. Datensätze typischerweise so codiert, dass Fehler, die durch Störungen im Kanal oder auf dem Datenträger verursacht werden, beim Empfang der Nachricht bzw. des Datensatzes erkannt oder korrigiert werden können. Als mögliche Fehler können insbesondere Amplituden- und Phasenfehler auftreten. Während Amplitudenfehler sich typischerweise als Einzel- oder Mehrfachbitfehler auswirken, können Phasenfehler ganze Nachrichteninhalte zerstören. Phasenfehler entstehen z. B. durch Ungenauigkeiten in der Bitsynchronisierung zwischen Sender und Empfänger. Ein Verfahren zur Vermeidung von Phasenfehlern ist die flankenweise Resynchronisation, d. h. mit dem Empfang einer jeden Nachrichtenflanke wird das Bit-Timing des Empfängers an den Datenstrom angepasst. Dieses Verfahren kann jedoch bei stark verrauschten Eingangssignalen zu einem Ausrasten der Bitsynchronisation und damit zum Verlust des Nachrichteninhalts führen. Ein solches Verfahren, bei dem ausgehend von einer erkannten Flanke die Dauer einer Bitzeit angepasst wird, ist z.B. aus der CAN-Specification Version 1.2. Robert Bosch GmbH, 1990. bekannt. Dieses Verfahren kann jedoch bei stark verrauschten Eingangssignalen zu einem Ausrasten der Bit-Synchronisation und damit zum Verlust des Nachrichteninhalts führen.

Die US 4,788,696 beschreibt eine Signalverarbeitungsschaltung mit einem Demodulator und einem A/D Konverter. Dem Demodulator wird ein Nachrichtensignal zugeführt, welches an einen A/D Konverter weitergeleitet wird. Vor der Zuführung zum A/D Konverter wird ein Taktrückgewinnungssignal entnommen, welches einer Rückgewinnungsschaltung zugeführt wird, die wiederum ein Steuersignal für eine variable Phasenverschiebungseinheit erzeugt. Das digital gewandelte Signal wird einem Fehlerratendetektor zugeführt, der eine Fehlerrateninformation ermittelt, die einer Phasensteuerschaltung zugeführt wird. Die Phasensteuerschaltung erzeugt ein Steuersignal, das wiederum der variablen Phasenverschiebungseinheit zugeführt wird, die dann wiederum den Takt des A/D Konverters beeinflusst.

Die EP 0 425 302 A2 zeigt einen digitalen PLL Decoder. Der PLL Decoder weist drei Flip-Flops auf, die mit unterschiedlichen Takten getaktet werden und somit drei unterschiedliche Ausgangssignale ausgeben. Die drei unterschiedlichen Ausgangssignale werden einer Phasenvergleichslogik zugeführt, die wiederum Ausgangssignale zu einem Zähler liefert, der in Abhängigkeit der Ausgangssignale des Phasenvergleichers die Verzögerungszeiten zur Steuerung der Takte in den Verzögerungseinheiten verlängert oder verkürzt.

US 5,715,278 beschreibt ein Mobiltelefon und ein Verfahren zur Erhöhung der Wahrscheinlichkeit zum Empfang einer Nachricht in mobilen Kommunikationssystcmcn. Es wird ein Synchronisationsmustcr verwendet, um die Lage einer Nachricht zu bestimmen. Dabei wird ein CRC Check Status von mehreren Sample-Timing Positionen verwendet, um zu bestimmen, ob eine Nachricht akzeptiert werden soll oder nicht. Die erwartete Lage der Nachricht basiert auf den Sample-Timings vorangehender Nachrichten, die mittels eines Histogramms bestimmt werden. Die CRC Überprüfungseinheit gibt einen CRC Überprüfungsstatus aus.

Es ist Aufgabe der Erfindung eine Empfangsschaltung sowie ein diesbezügliches Verfahren aufzuzeigen, welche eine verbesserte Dekodierung des empfangenen Nachrichtensignals ermöglichten.

Diese Aufgabe wird erfindungsgemäß durch eine Empfangsschaltung gemäß den Merkmalen der unabhängigen Ansprüche gelöst.

Der Erfindung liegt die Idee zugrunde, bereits während des Empfangs eines Nachrichtensignals das Auftreten von Fehlern, die beispielsweise durch mangelhafte Synchronisation zwischen Sender und Empfänger entstehen könnten, zu vermeiden. Hierzu ist eine Signalqualitätsbestimmungseinheit vorgesehen, welche bereits während des Abtastvorgangs die Signalqualität des Abtastsignals bestimmt. Die Signalqualität ist ein Maß dafür, wie gut das empfangene Nachrichtensignal dem Erwartungsschema des Abtasters entspricht.

Die von der Signalqualitätsbestimmungseinheit gemessene Signalqualität wird als Eingangssignal an eine Steuereinheit geliefert. Die Steuereinheit steuert nun in Abhängigkeit der Signalqualität des Abtastsignals wenigstens einen Abtastparameter des Abtasters. Ist die Signalqualität des Abtastsignals hoch, können die Abtastparameter unverändert gelassen werden. Sinkt die Signalqualität des Abtastsignals, so steuert die Steuereinheit dem entgegen, verändert wenigstens einen Abtastparameter und erhöht dadurch die Signalqualität des Abtastsignals. Die Erfindung hat den Vorteil, dass sozusagen "online" die Abtastung gesteuert werden kann. Dadurch ist es möglich, frühzeitig eine Verschlechterung der Signalqualität zu erkennen und das Auftreten von Fehlern weitgehend oder gänzlich zu vermeiden.

Die Abtastung erfolgt vorzugsweise gemäß einem Abtastraster. Unter einem Abtastraster wird ein sich periodisch wiederholendes Erwartungsraster verstanden. Das Erwartungsraster besteht aus Erwartungsfenstern, wobei der Abtaster zu einem vorgebbaren Zeitpunkt des Erwartungsfensters, vorzugsweise in der Fenstermitte, eine bestimmte Signaleigenschaft des Nachrichtensignals erwartet. Bei flankencodierten Nachrichtensignalen ist die erwartete Signaleigenschaft ein Flankenwechsel des Nachrichtensignals.

Einerseits ist die Steuereinheit zur Steuerung des Referenzpunktes des Abtastrasters vorgesehen. Der Referenzpunkt stellt den zeitlichen Bezugspunkt des Abtastrasters in Bezug auf das eingehende Nachrichtensignal dar. Das Abtastraster selbst, d. h. die Periode des Abtastrasters, bleibt unverändert. Es erfolgt lediglich eine zeitlich relative Verschiebung des Abtastrasters in Bezug auf das eingehende Nachrichtensignal.

De facto wird durch diese Anpassung des Referenzpunktes eine Nachsynchronisation des Bit-Timings durchgeführt, d. h. die Erwartungszeitpunkte werden basierend auf dem gemessenen Timing neu geschätzt. Das aktuelle Bit wird entweder verkürzt oder verlängert.

Andererseits wird die Steuereinheit zur Steuerung der Abtastperiode des Abtastrasters verwendet. Bei dieser Ausgestaltung wird somit das Erwartungsraster dauerhaft verändert. Die Abtastfrequenz kann z. B. mittels einer PLL nachgeführt werden. Dadurch wird eine bleibende, sich aufbauende Abweichung zwischen dem Timing des Senders und des Empfängers dauerhaft ausgeregelt.

Diese Anpassung wird vorzugsweise bis zum Ende der Nachrichtenübertragung beibehalten, und ggf. kann im weiteren Verlauf der Nachrichtenübertragung die Abtastperiode nochmalig angepasst werden.

Bei flanken codierten Signalen ist die Information des Nachrichtensignals durch das zeitliche Auftreten der Signalflanken bestimmt. Die Amplitude des Nachrichtensignals enthält bei flankencodierten Signalen keine Information. Besonders geeignet ist der Xerxes-Code.

Bei der vorteilhaften Ausgestaltung der Erfindung gemäß Anspruch 2 erfolgt die Anpassung des Abtastparameters unter Berücksichtigung der Dynamik der Signalqualität. Die Dynamik der Signalqualität ist u. a. dadurch bestimmt, ob sich die Signalqualität kontinuierlich oder sprunghaft verändert und/oder ob sich die Signalqualität langsam oder schnell verändert. In Abhängigkeit der Dynamik der sich ändernden Signalqualität wird dann die Abtastung des Signalparameters durchgeführt. Bei einer schnellen kontinuierlichen Verschlechterung der Signalqualität des Abtastsignals sollte auch eine schnelle Nachsteuerung wenigstens eines Abtastparameters erfolgen. In entsprechender Weise kann bei einer geringeren Dynamik der Änderung der Signalqualität des Abtastsignals auch die Dynamik der Steuerung des Abtastparameters geringer sein.

Der Abtaster kann als A/D-Wandler oder Schwellwertentscheider ausgeführt werden. Der Schwellwertentscheider arbeitet vorzugsweise mit n-fachem Oversampling und liefert eine Folge von Einsen und Nullen. Die Realisierung des Abtasters als A/D-Wandler eröffnet eine größere Anzahl von Möglichkeiten zur Qualitätsanalyse So ist es z. B. bei flachen Signalflanken mittels eines A/D-Wandlers möglich, aus dem Verlauf des Signals die Flankenposition zu schätzen. Dem A/D-Wandler sollte ein Bandpassfilter vorgeschaltet sein, um aliasing zu vermeiden.

Der Dekodierer dekodiert den Bit-Strom des Abtastsignals und führt vorzugsweise gleichzeitig eine Überprüfung auf etwaige Codeverletzungen durch. Die Prüfeinheit führt eine Prüfung auf Ebene des rekonstruierten Bit-Stromes durch, z B. mittels CRC (Cyclic Redundancy Check)-Prüfung Vorzugsweise können die von der Dekodiereinheit und der Prüfeinheit erkannten Fahler ebenfalls zur Steuerung des Abtasters verwendet werden.

Vorzugsweise werden diese Fehlersignale gemäß Anspruch 8 zur Anpassung des Steueralgorhythmus des Abtasters verwendet. Wird beispielsweise als Abtastparameter die Abtastperiode gesteuert, so können die Fehlersignale dazu verwendet werden, die Periodendauer mehr oder weniger schnell zu verändern. Außerdem kann vorzugsweise in Abhängigkeit der Fehlersignale die Schwelle, ab der ein Abtastparameter verändert wird, gesteuert werden. Wenn die Dekodiereinheit und/oder die Prüfeinheit Fehler signalisieren, kann die Schwelle, ab der eine Steuerung einsetzt, erniedrigt werden, um dem Auftreten weiterer Fehler vorzubeugen.

Bei flankencodierten Signalen generiert der Abtaster ein Erwartungsfenster, innerhalb dessen er das Auftreten einer Signalflanke im Nachrichtensignal erwartet. Der Erwartungszeitpunkt kann beispielsweise in der Mitte oder auch am Rand eines Erwartungsfensters liegen. Tritt die Signalflanke des empfangenen Nachrichtensignals zu dem Erwartungszeitpunkt oder zeitnah zu dem Erwartungszeitpunkt auf, so ist die Signalqualität des Abtastsignals hoch und eine Steuerung des Abtasters ist nicht erforderlich. Treten signifikante Abweichungen der tatsächlich empfangenen Signalflanken zu dem Erwartungszeitpunkt auf, so sinkt die Qualität des Abtastsignals und eine Steuerung wenigstens eines Abtastparameters zur Erhöhung der Signalqualität wird durchgeführt.

Grundsätzlich ist diese Erfindung in allen Anwendungsbereichen der Kommunikations- und Speichertechnik anwendbar. Insbesondere sicherheitskritische Anwendungen in der Automobiltechnik, Industrieautomatisierung, Medizintechnik usw. profitieren von der adaptiven Abtastung in Hinsicht auf den für die angestrebte Sicherheit zu leistenden Aufwand.

Die Aufgabe der Erfindung ist für das Verfahren gelöst durch ein Verfahren gemäß Anspruch 5.

Einige Ausführungsbeispiele der Erfindung werden nachfolgend anhand der Zeichnungen in den Figuren 1-3 näher erläutert. Es zeigen:
- Figur 1: ein Blockschaltbild einer erfindungsgemäßen Empfangsschaltung,
- Figur 2: den zeitlichen Verlauf eines flankencodierten Nachrichtensignals mit Signalflanken an den Rändern der Bitzeit,
- Figur 3: den zeitlichen Verlauf eines flankencodierten Nachrichtensignals mit einer Signal- flanke in der Mitte der Bitzeit.

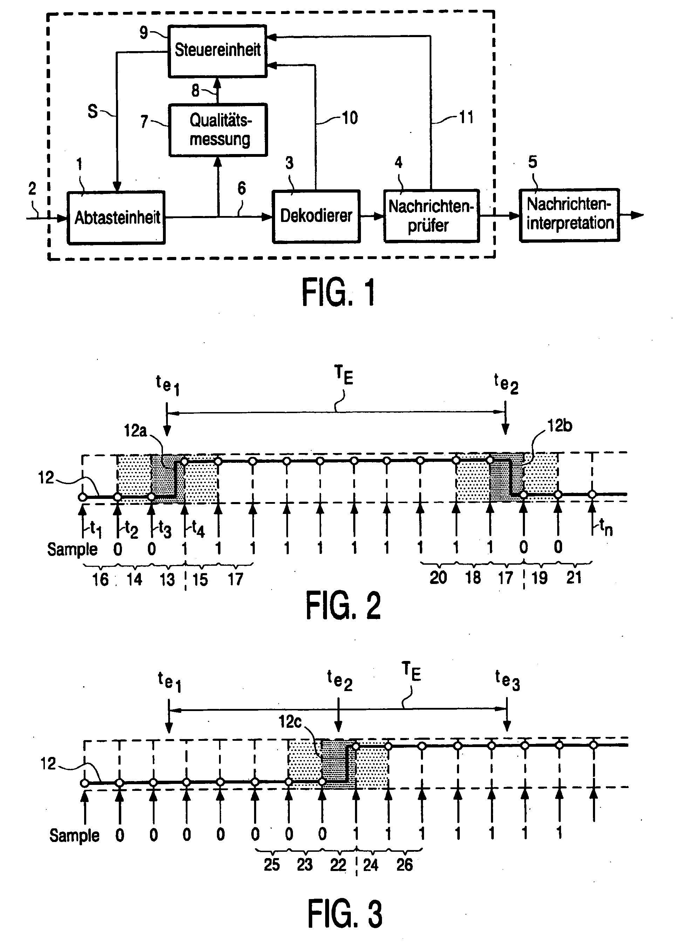

Figur 1 zeigt eine Empfangsschaltung mit einer Abtasteinheit 1, welcher eingangsseitig ein Nachrichtensignal 2 zugeführt wird. Der Abtasteinheit 1 ist ein Dekodierer 3 nachgeschaltet. Dem Dekodierer 3 ist eine Prüfeinheit 4 nachgeschaltet. Der Prüfeinheit 4 schließlich ist eine Nachrichteninterpretationseinheit 5 nachgeschaltet. Das Ausgangssignal der Abtasteinheit 1, welches dem Dekodierer 3 eingangsseitig zugeführt wird, wird als Abtastsignal 6 bezeichnet.

Das Abtastsignal 6 wird zusätzlich eingangsseitig einer Signalqualitätsbestimmungseinheit 7 zugeführt. Die Signalqualitätsbestimmungseinheit 7 liefert als Ausgangssignal ein Qualitätssignal 8 an eine Steuereinheit 9. Der Steuereinheit 9 werden zusätzlich ein erstes Fehlersignal 10 von dem Dekodierer 3 und ein zweites Fehlersignal 11 von der Prüfeinheit 4 zugeführt. Die Steuereinheit 9 liefert ein Steuersignal S an die Abtasteinheit 1.

Das dar Abtasteinheit 1 zugeführte Nachrichtensignal 2 ist ein analoges Signal, welches codierte Informationen auftweist. Das Nachrichtensignal 2 wird von der Abtasteinheit 1 abgetastet und in das Abtastsignal 6 umgewandelt. Die Abtasteinheit 1 kann beispielsweise als Schwellwertentscheider mit n-fachem Oversampling realisiert werden. In diesem Fall liefert die Abtasteinheit 1 als Abtastsignal eine Folge von Nullen und Einsen an den Dekodierer 3. Alternativ kann die Abtasteinheit 1 als A/D-Wandler realisiert werden. Dieser weist vorzugsweise eine geringe Auflösung auf.

Mit einem derartigen A/D-Wandler kann mehr Qualitätsanalyse durchgeführt werden. So kann man mittels eines A/D-Wandlers z. B. bei flachen Signalflanken selbst dann, wenn der Schwellwertentscheider nicht mehr korrekt arbeitet, aus dem Verlauf des Signals die Flankenposition eines flankencodierten Signals geschätzt werden. Bei der Realisierung der Abtasteinheit 1 mittels eines A/D-Wandlers sollte dem A/D-Wandler ein Bandpassfilter vorgeschaltet werden, um Aliasing zu vermeiden. Der Dekodierer 3 decodiert das Abtastsignal und wandelt es in einen Bit-Strom um. Das Nachrichtensignal 2 kann beispielsweise ein flankencodiertes Signal sein, z B. ein Xerxes-codiertes SignaL In einem solchen Fall ist der Dekodierer 3 als Xerxes-Dekodierer ausgeführt. Zusätzlich zu der Dekodierung führt der Dekodierer 3 eine Überprüfung auf Code-Verletzungen aller Art durch und liefert bei Erkennen einer Codeverletzung ein erstes Fehlersignal 10 an die Steuereinheit 9. Die dem Dekodierer 3 nachgeschaltete Prüfeinheit 4 führt eine Überprüfung des von dem Dekodierer 3 gelieferten Bit-Stromes durch, z B. mittels CRC (Cyclic Redundancy Check). Stellt die Prüfeinheit 4 Fehler fest, liefert sie ein zweites Fehlersignal 11 an die Steuereinheit 9. Das Ausgangssignal der Prüfeinheit 4 wird einer Nachrichteninterpretationseinheit 5 zugeführt, welche eine weitere Nachrichtenverarbeitung bzw Datenverarbeitung durchführt. Die Signalqualitätsbestimmungseinheit 7 bestimmt die Signalqualität des Abtastsignals 6. Die Abtasteinheit 1 tastet das Nachrichtensignal 2 in periodischen Abständen ab und erwartet zu bestimmten Zeitpunkten bzw. innerhalb bestimmter Zeitspannen ein Ereignis in dem Nachrichtensignal 2. Ein solches Ereignis kann z B. bei flankencodierten Signalen ein Flankenwechsel sein. Tritt das erwartete Ereignis, z B. der Flankenwechsel, zu dem vom Abtaster erwarteten Zeitpunkt bzw innerhalb der vom Abtaster erwarteten Zeitspanne (Erwartungsfenster) auf, so ist die Qualität des Abtastsignals hoch, und eine Steuerung der Abtasteinheit 1 ist nicht erforderlich. Tritt das Ereignis jedoch zu einem anderen Zeitpunkt als erwartet in dem Abtastsignal 6 auf, so ist die Qualität des Abtastsignals gering und eine Steuerung der Abtasteinheit 1 angebracht. Derartige Abweichungen können z B. durch Ungenauigkeiten in der Bit-Synchronisierung zwischen Sender und Empfänger auftreten. Die Signalqualitätsbestimmungseinheit 7 bestimmt die Signalqualität des Abtastsignals 6, d h sie überprüft, ob innerhalb der Erwartungsfenster bzw. zu den erwarteten Zeitpunkten die erwarteten Ereignisse auch tatsächlich in dem Abtastsignal 6 vorhanden sind. Diese gemessenen Abweichungen übermittelt die Signalqualitätsbestimmungseinheit 7 in Form eines Qualitätssignals 8 an die Steuereinheit 9. Die Steuereinheit 9 wertet das Qualitätssignal 8 aus und entscheidet, ob eine Steuerung der Abtasteinheit 1 notwendig bzw. vorteilhaft ist. Ist dies der Fall, so liefert sie ein Steuersignal 12 an die Abtasteinheit 1 und steuert damit wenigstens einen Abtastparameter der Abtasteinheit 1. Als Abtastparameter werden von der Steuereinheit 9 vorzugsweise der Referenzpunkt des Abtastrasters oder die Abtastperiode selbst gesteuert. Dies wird nachfolgend anhand der Figur 2 näher erläutert.

Figur 2 zeigt einen beispielhaften zeitlichen Verlauf eines Nachrichtensignals 12. Das Nachrichtensignal 12 ist flankencodiert, d. h. die Information ist in der zeitlichen Abfolge des Auftretens der Flanken enthalten. Das Nachrichtensignal 12 weist eine erste aufsteigende Flanke 12 a und eine zweite abfallende Flanke 12 b auf. Das Nachrichtensignal 12 wird zu den Zeitpunkten t₁, t₂ bis tₙ abgetastet. Dies ist in der Figur 2 durch senkrechte Pfeile dargestellt. Als Ergebnis der Abtastung sind in der Figur 2 unterhalb der senkrechten Pfeile die Ergebnisse der Abtastung in Form einer Bit-Folge angegeben. Das Abtasten gemäß Figur 2 erfolgt mittels eines Schwellwertentscheiders. Zu den Zeitpunkten t₁, t₂ und t₃ liefert der Schwellwertentscheider als Abtastsignal eine 0 und zu dem Zeitpunkt t₄ eine 1. Zwischen den Zeitpunkten t₃ und t₄ ist somit ein Flankenwechsel aufgetreten. Durch die Abtastung zu den Abtastzatpunkten t₁, t₂ bis tₙ wird ein Abtastraster gebildet. In der Figur 2 ist ein Erwartungsfenster 13 dargestellt, innerhalb dessen die Abtasteinheit 1 einen Flankenwechsel erwartet. Tritt der Flankenwechsel innerhalb dieses Erwartungsfensters 13 auf, so ist die Signalqualität des Abtastsignals hoch, und ein Einwirken der Steuereinheit 9 auf die Abtasteinheit 1 ist nicht erforderlich Rechts und links neben dem Erwartungsfenster 13 sind zwei Toleranzfenster 14 und 15 dargestellt. Tritt der Flankenwechsel innerhalb dieser Toleranzfenster 14 und 15 auf, so ist die Signalqualität des Abtastsignals zwar nicht mehr optimal, aber diese Abweichung kann noch toleriert werden, und es wird ebenfalls noch keine Anpassung bzw Änderung der Abtastparameter bzw der Abtastmethode durchgeführt. Jeweils rechts und links neben den Toleranzfenstern 14 und 15 befinden sich Fehlerfenster 16 und 17. Tritt der Flankenwechsel innerhalb dieser Fehlerfenster 16 oder 17 auf, so ist die Signalqualität des Abtastsignals so gering dass eine Steuerung der Abtasteinheit erforderlich ist. Die Signalqualitätsbestimmungseinheit 7 liefert daher ein Qualitätssignal 8 an die Steuereinheit 9 und diese wiederum ein Steuersignal S an die Abtasteinheit 1. Als Folge wird nun das Erwartungsfenster 13 und somit der Referenzpunkt des Abtastrasters verschoben und an die tatsächlich auftretende Flanke angepasst. De facto wird durch diese Anpassung eine Nachsynchronisation des Bit-Timings durchgeführt, d. h. das Erwartungsfenster bzw. die Erwartungszeitpunkte werden basierend auf dem gemessenen Timing neu geschätzt. Das aktuelle Bit wird entweder verkürzt oder verlängert. Anstelle einer einmaligen Verkürzung bzw. Verlängerung der Bit-Periode bzw. einer Verschiebung des Erwartungsfensters kann auch die Abtastperiode selbst verkürzt oder verlängert werden. Dies führt zu einer entsprechenden Verkürzung oder Verlängerung des Erwartungsfensters 13, der Toleranzfenster 14 und 15 sowie der Fehlerfenster 16 und 17. Ein Nachführen der Abtastfrequenz z. B. durch eine PLL führt dazu, dass eine bleibende, sich aufbauende Abweichung zwischen dem Bit-Timing des Senders und des Empfängers dauerhaft ausgeregelt wird. Zusätzlich können die Fehlersignale 10 und 11 des Dekodierers 3 und der Prüfeinheit 4 zur Steuerung der Abtasteinheit 1 verwendet werden. Insbesondere kann die Art der Steuerung von diesen Fehlersignalen 10 und 11 beeinflusst werden. So ist es insbesondere vorteilhaft, die Dynamik des Steueralgorithmus zu erhöhen, wenn der Dekodierer 3 oder die Prüfeinheit 4 Fehlersignale liefern. Dies ist beispielsweise dadurch möglich, dass in dem Fall, dass der Dekodierer 3 und/oder die Prüfeinheit 4 Fehlersignale liefern, eine Steuerung bereits dann erfolgt, wenn der Flankenwechsel innerhalb der Toleranzfenster 14 oder 15 auftritt.

In entsprechender Weise sind für die zweite abfallende Flanke 12 b ein Erwartungsfenster 17, zwei Toleranzfelder 18 und 19, sowie zwei Fehlerfenster 20 und 21 aufgespannt. Die zeitliche Mitte des Erwartungsfensters 13 bestimmt einen ersten Erwartungszeitpunkt tₑ₁ und die zeitliche Mitte des Erwartungsfensters 17 einen zweiten Erwartungszeitpunkt tₑ₂. Die Erwartungszeitpunkte tₑ₁ und tₑ₂ geben jeweils den nominellen Zeitpunkt an, zu dem die Signalflanke nominell erwartet wird.

Der Abstand zwischen den Erwartungszeitpunkten tₑ₁ und tₑ₂ bildet die Bitzeit T_{E}. Diese stellt die Periodendauer eines Bits dar.

Je nach Codierung könnten auch andere Abstände vorgesehen sein, wie z.B. bei einer Xerxes-Codierung ungerade Vielfache der halben Bitzeit.

Figur 3 zeigt einen derartigen beispielhaften Signalverlauf des Nachrichtensignals 12 mit einer auftretenden Flanke 12c in der Mitte einer Bitzeit T_{E}. In entsprechender Weise ist dann in der Mitte der Bitzeit ein zusätzlicher Erwartungszeitpunkt vorgesehen und in der Fig. 3 ergeben sich dann z.B. drei mögliche Erwartungszeitpunkte tₑ₁ , tₑ₂ und tₑ₃.

Um den mittigen Erwartungszeitpunkt tₑ₂ sind in entsprechender Weise ein Erwartungsfenster 22, zwei Toleranzfenster 23 und 24, sowie zwei Fehlerfenster 25 und 26 aufgespannt.

Betrachtet man Figur 2 und 3 zusammen, so erkennt man, dass eine eindeutige Zuordnung einer abgetasteten Signalflanke zu einer Position z.B. am Anfang einer Bitzeit bzw. in der Mitte einer Bitzeit nur dann möglich ist, wenn der Flankenwechsel innerhalb des durch Erwartungsfenster, Toleranzfenster und Fehlerfenster festgelegten Zeitbereichs liegt.

Eine zusätzliche Prüfung bei der Sampling-Qualitätsanalyse könnte die Dynamik der auftretenden Änderung sein. Dieser Ansatz bedingt, dass das Maß für die Qualitätsbewertung des vorangegangenen Messpunktes gespeichert werden muss.

Grundvoraussetzung für die Vorteile des dynamisch adaptierten Sampling-Verfahrens ist eine langsame, kontinuierliche Abweichung in eine Richtung Diese Annahme wird durch das Systemverhalten getragen, welches bei Abweichungen bzw. Drift der Frequenzgeneratoren oder einer temperatur- oder alterungsbedingten Änderung von Durchlaufverzögerungen einzelner Komponenten (Kabel, Netzwerkkoppler) im Übertragungskanal für den Empfangsknoten als Verschlechterung in der Sampling-Qualität sichtbar wird.

Eine sprunghafte Veränderung der Sampling-Qualität kann auf zB. durch EM-Einstrahlung modifizierte Signalströme zurückgeführt werden. Solche Modifikationen sollen möglichst nicht zu einer Verschiebung des Erwartungsrasters (im schlimmsten Fall um T_{E}/2) führen. Eine Art Tiefpass im Anpassungsalgorithrnus für das Bittiming kann diesen Einfluss minimieren.

Beispielhaft könnte ein Algorithmus wie folgt beschrieben werden:
Wird eine Flanke einem Fehlerfenster zugeordnet, dh es wird normalerweise eine Anpassung der Samplingfrequenz oder der Sampleinterpretation durchgeführt, so wird zunächst geprüft, ob sich auch der vorangegangene Wert schon vom idealen Zeitpunkt (Erwartungsfenster, Erwartungszeitpunkt) entfernt hatte und bereits im Toleranzfenster lag. Ist eine solche Historie gegeben, so wird die Anpassung durchgerührt. Sonst wird diese Indikation ignoriert, auf eine fehlerhafte Verfälschung des Signals geschlossen und es erfolgt kleine Verschiebung des Erwartungsrasters bzw. Erwartungsfensters.

Hier sind auch andere Algorithmen möglich, die zB. eine längere Historie für die Entscheidung einbeziehen, oder aber eine Mittelwertbildung durchführen und dadurch nur einen Teil der festgestellten Abweichung nachregeln.

Das Eingangssignal kann einer Tiefpass-Filterung (im Wertebereich) unterliegen, die Signalpeaks in der Größenordnung von 1..m Abtastperioden herausfiltert. Dazu sind sowohl analoge Filter, als auch digitale Filter, z.B. basierend auf einer gewichteten Schieberegisterstruktur, denkbar. Eine solche Einheit wäre vor der oben beschriebenen Signalqualitätsbestimmungseinheit vorgesehen, d.h. die angegebene Folge von 0en und 1en ist der Ausgang eines solchen Filters und die Eingangsfolge für die beschriebene Abbildung auf die Referenzmarken und die Anwendung der Qualitätsfenster.

## Patentansprüche

1. Empfangsschaltung zum Empfang von flankencodierten Nachrichtensignalen (2) enthaltend:
- einen Abtaster (1) zur Umwandlung des Nachrichtensignals (2) in ein Abtastsignal (6),
- eine Signalqualitätsbestimmungseinheit (7) zur Bestimmung eines Flankenwechsels im Abtastsignal (6); und
- eine Steuereinheit (9) zur Steuerung wenigstens eines Abtastparameters des Abtasters (1) in Abhängigkeit des Flankenwechsels, wobei die Abtastung des Nachrichtensignals (2) mit einem Abtastrasters vorgesehen ist, das wenigstens ein sich periodisch wiederholendes Erwartungsrenster (13) umfasst, wobei die Signalqualitätsbestimmungseinheit (7) eingerichtet ist, das Abtastsignal (6) auf einen Flankenwechsel zu einem vorgebbaren Zeitpunkt innerhalb des Erwartungsfensters (13) zu überprüfen,
**dadurch gekennzeichnet, dass**
die Empfangsschaltung eine Dekodiereinheit (3) zur Dekodierung des zugeführten Abtastsignals (6) und zur Überprüfung des Abtastsignals (6) auf Codeverletzungen aufweist, die ein dekodiertes Abtastsignal und bei Codeverletzungen ein erstes Fehlersignal (10) an die Steuereinheit (9) ausgibt, wobei das dekodierte Abtastsignal in Form eines Bit-Stroms einer Prüfeinheit (4) zugeführt wird, die zur Überprüfung des Bit-Stroms dient und ein Ausgangssignal und bei einem Fehler im Bit-Strom ein zweites Fehlersignal (11) an die Steuereinheit (9) ausgibt; wobei der Abtaster (1) als A/D Wandler oder Schwellwertentscheider ausgebildet ist und die Steuereinheit (9) eingerichtet ist, einen Referenzpunkt und/oder die Abtastperiode des Abtastrasters zu steuern und dazu das erste und zweite Fehlersignal (7) zu verwenden, wobei der Referenzpunkt einen zeitlichen Bezugspunkt des Abtastrasters in Bezug auf das eingehende Nachrichtensignal (2) darstellt.

2. Empfangsschaltung nach Anspruch 1, **dadurch gekennzeichnet, dass** die Steuereinheit (9) dazu vorgesehen ist, die Anpassung des Abtastparameters unter Berücksichtigung der Dynamik der Signalqualität durchzuführen.

3. Empfangsschaltung nach Anspruch 1, **dadurch gekennzeichnet, dass** die Steuereinheit derart eingerichtet ist, die ersten und zweiten Fehlersignale (10, 11) zur Anpassung eines Steueralgorithmus des Abtasters (1) zu verwenden.

4. Empfangsschaltung nach Anspruch 1, **dadurch gekennzeichnet, dass** der Abtaster derart eingerichtet ist, dass er (1) zur Bestimmung der Signalqualität ein Erwartungsfeuster (13) aufspannt, innerhalb dessen im Nachrichtensignal (2) eine Signalflanke erwartet wird, wobei die Signalqualität durch die zeitliche Position der Signalflanke innerhalb des Erwartungsfensters definiert ist.

5. Verfahren zum Empfang von flankencodierten Nachrichtensignalen, bei dem das Nachrichtensignal (2) von einem Abtaster (1) mit einem Abtastraster in ein Abtastsignal (6) umgewandelt wird, wobei das Abtastraster wenigstens ein sich periodisch wiederholendes Erwartungsfenster (13) umfasst, und einer Signalqualitätsbestimmungseinheit (7) zur Bestimmung eines Flankenwechsels zu einem vorgebbaren Zeitpunkt innerhalb des Erwartungsfensters im Abtastsignal (6) zugeführt wird, wobei wenigstens ein Abtastparameter des Abtasters (1) in Abhängigkeit des Flankenwechsels von einer Steuereinheit (9) gesteuert wird, **dadurch gekennzeichnet, dass** das Abtastsignal (6) in einer Dekodiereinheit (3) dekodiert wird, wobei die Dekodiereinheit (3) das Abtastsignal (6) auf Codeverletzungen überprüft und ein dekodiertes Abtastsignal in Form eines Bit-Stroms und bei Codeverletzungen ein erstes Fehlersignal (10) an die Steuereinheit (9) ausgibt, wobei der Bit-Strom in einer Prüfeinheit (4) auf Fehler überprüft wird und die Prüfeinheit (4) ein Ausgangssignal und bei einem Fehler im Bit-Strom ein zweites Fehlersignal (11) an die Steuereinheit (9) ausgibt, wobei der Abtaster (1) als A/D Wandler oder Schwellwertentscheider ausgebildet ist und die Steuereinheit (9) einen Referenzpunkt und/oder die Abtastperiode des Abtastrasters steuert und dazu das erste und zweite Fehlersignal (7) verwendet, wobei der Referenzpunkt einen zeitlichen Bezugspunkt des Abtastrasters in Bezug auf das eingehende Nachrichtensignal (2) darstellt.

## Claims

1. A receiving circuit for receiving edge-coded message signals (2), the receiving circuit comprising:
- a scanner (1) for converting the message signal (2) into a scanned signal (6),
- a signal quality determining unit (7) for determining an edge change in the scanned signal (6); and
- a control unit (9) for controlling at least one scanning parameter of the scanner (1) in dependence upon the edge change, the scanning of the message signal (2) being executed by means of a scanning grid which comprises at least a periodically recurring expectation window (13), while the signal determining unit (7) is arranged for examining the scanned signal (6) for a change of edge at a predeterminable instant within the expectation window (13), **characterized in that**
the receiving circuit includes a decoding unit (3) for decoding the scanned signal (6) applied thereto and for examining the scanned signal (6) for code violations, which decoding unit (3) applies a decoded scanned signal and in the event of code violations applies a first error signal (10) to the control unit (9), where the decoded scanned signal is applied to an examination unit (4) in the form of a bitstream, which examination unit is used for examining the bitstream and applies an output signal and in the event of an error in the bitstream a second error signal (11) to the control unit (9); where the scanner (1) is arranged as an analog-to-digital converter or threshold decision circuit and the control unit (9) is arranged for controlling a reference point and/or the scanning period of the scanning grid and to this end uses the first and second error signal (7) with the reference point representing a time-depenent reference point of the scanning grid with respect to the incoming message signal (2).

2. A receiving circuit as claimed in claim 1, **characterized in that** the control unit (9) is arranged for executing the adaptation of the scanning parameter while the dynamic of the signal quality is taken into account.

3. A receiving circuit as claimed in claim 1, **characterized in that** the control unit is arranged such that the first and second error signals (10, 11) are used for adapting a control algorithm of the scanner (1).

4. A receiving circuit as claimed in claim 1, **characterized in that** for determining the signal quality the scanner (1) is arranged such that it spreads out an expectation window (13) within which a signal edge is expected to occur in the message signal while the signal quality is defined by the time-dependent position of the signal edge within the expectation window.

5. A method of receiving edge-coded message signals in which the message signal (2) is converted into a scanned signal (6) by means of a scanner (1) with a scanning grid, the scanning grid comprising at least a periodically recurring expectation window (13) and being applied to a signal quality determining unit (7) for determining an edge change at a predeterminable instant within the expectation window in the scanned signal (6), while at least one scanning parameter of the scanner (1) is controlled by a control unit (9) in dependence on the edge change, **characterized in that** the scanned signal (6) is decoded in a decoding unit (3) where the decoding unit (3) examines the scanned signal (6) for code violations and applies a decoded scanned signal in the form of a bitstream and in the event of code violations applies a first error signal (10) to the control unit (9), while the bitstream is examined for errors in an examination unit (4) and the examination unit (4) applies an output signal and in the event of an error in the bitstream a second error signal (11) to the control unit (9), where the scanner (1) is arranged as an analog-to-digital converter or threshold decision circuit and the control unit (9) is arranged for controlling a reference point and/or the scanning period of the scanning grid and to this end uses the first and second error signal (7) with the reference point representing a time-depenent reference point of the scanning grid with respect to the incoming message signal (2).

## Revendications

1. Circuit de réception destiné à recevoir des signaux d'information (2) dont les flancs sont codés, ledit circuit contenant :
- un échantillonneur (1) destiné à convertir le signal d'information (2) en un signal échantillonné (6),
- une unité de détermination de qualité de signal (7) destinée à déterminer une variation de flanc dans le signal échantillonné (6) ; et
- une unité de commande (9) destinée à commander un paramètre d'échantillonnage de l'échantillonneur (1) en fonction de la variation de flanc, l'échantillonnage du signal d'information (2) étant prévue avec une trame d'échantillonnage qui comporte au moins une fenêtre d'attente (13) qui se répète périodiquement, l'unité de détermination de qualité de signal (7) étant conçue pour vérifier si le signal échantillonné (6) présente une variation de flanc à un instant, pouvant être fixé à l'avance, dans la fenêtre d'attente (13),
**caractérisé en ce que**
le circuit de réception possède une unité de décodage (3) qui est destinée à décoder le signal échantillonné (6) amené et à vérifier si le signal échantillonné (6) présente des violations de code et qui délivre un signal échantillonné décodé et, en cas de violations de code, un premier signal d'erreur (10) à l'unité de commande (9), le signal échantillonné décodé étant amené sous la forme d'un flux de bits à une unité de vérification (4) qui sert à vérifier le flux de bits et qui délivre un signal de sortie et, en cas d'erreur dans le flux de bits, un deuxième signal d'erreur (11) à l'unité de commande (9) ; l'échantillonneur (1) étant conformé en convertisseur A/N ou en circuit de décision à valeur de seuil et l'unité de commande (9) étant conçue pour commander un point de référence et/ou la période d'échantillonnage de la trame d'échantillonnage et utiliser pour cela les premier et deuxième signaux d'erreur (7), le point de référence représentant une origine temporelle de la trame d'échantillonnage par rapport au signal d'information entrant (2).

2. Circuit de réception selon la revendication 1, **caractérisé en ce que** l'unité de commande (9) est prévue pour effectuer l'adaptation du paramètre d'échantillonnage en tenant compte de la dynamique de la qualité de signal.

3. Circuit de réception selon la revendication 1, **caractérisé en ce que** l'unité de commande est conçue pour utiliser les premier et deuxième signaux d'erreur (10, 11) dans l'adaptation d'un algorithme de commande de l'échantillonneur (1).

4. Circuit de réception selon la revendication 1, **caractérisé en ce que**, pour déterminer la qualité de signal, l'échantillonneur (1) est conçu pour ouvrir une fenêtre d'attente (13) dans laquelle est attendu un flanc de signal dans le signal d'information, la qualité de signal étant définie par la position temporelle du flanc de signal à l'intérieur de la fenêtre d'attente.

5. Procédé de réception de signaux d'information dont les flancs sont codés, dans lequel le signal d'information (2) est converti en signal échantillonné (6) par un échantillonneur (1) avec une trame d'échantillonnage, la trame d'échantillonnage comportant au moins une fenêtre d'attente (13) qui se répète périodiquement et étant amenée à une unité de détermination de qualité de signal (7) destinée à déterminer une variation de flanc à un instant, pouvant être fixé à l'avance, à l'intérieur de la fenêtre d'attente dans le signal échantillonné (6), au moins un paramètre d'échantillonnage de l'échantillonneur (1) étant commandé par une unité de commande (9) en fonction de la variation de flanc, **caractérisé en ce que** le signal échantillonné (6) est décodé dans une unité de décodage (3), l'unité de décodage (3) vérifiant si le signal échantillonné (6) présente des violations de code et délivrant un signal échantillonné décodé se présentant sous la forme d'un flux de bits et, en cas de violations de code, un premier signal d'erreur (10) à l'unité de commande (9), le flux de bits étant vérifié dans une unité de vérification (4) pour détecter la présence d'erreurs et l'unité de vérification (4) délivrant un signal de sortie et, en présence d'une erreur dans le flux de bits, un deuxième signal d'erreur (11) à l'unité de commande (9), l'échantillonneur (1) étant conformé en convertisseur A/N ou en circuit de décision à valeur de seuil et l'unité de commande (9) commandant un point de référence et/ou la période d'échantillonnage de la trame d'échantillonnage et utilisant pour cela les premier et deuxième signaux d'erreur (7), le point de référence représentant une origine temporelle de la trame d'échantillonnage par rapport au signal d'information entrant (2).
